# EUROPÄISCHE PATENTANMELDUNG

(11) **EP 3 848 275 A1**
(43) Veröffentlichungstag der Anmeldung: **14.07.2021**
(21) Anmeldenummer: 20213438.3
(22) Anmeldetag: 11.12.2020
(51) Int. Cl.: B62D 55/04, B62D 55/20

(54) **KETTENLAUFWERKE FÜR MOBILBAGGER**

(30) Priorität: 08.01.2020 DE 102020100212
(71) Anmelder: Josef Bergmeister e.K. Bauunternehmen, 82418 Murnau (DE)
(72) Erfinder: Bergmeister, Josef, 82418 Murnau (DE)
(74) Vertreter: Flosdorff, Jürgen

(57) **Zusammenfassung**

Die Kettenlaufwerke für Mobilbagger mit Zwillingsrädern und Zwillingsreifen, zwischen deren Reifen jeweils ein Spalt verbleibt, sind dadurch gekennzeichnet, dass jeweils ein Kettenlaufwerk auf den Zwillingsreifen beider Seiten des Mobilbaggers montierbar ist und Bodenplatten aufweist, die auch bei eingelenkten Rädern gegen seitliche Verschiebung an den Zwillingsreifen gehalten sind.

## Beschreibung

Die Erfindung betrifft Kettenlaufwerke für Mobilbagger, die vier Zwillingsräder mit Zwillingsreifen haben, zwischen deren Reifen jeweils ein Spalt verbleibt.

Derartige Mobilbagger haben zahlreiche Vorteile, so dass sie weit verbreitet sind. Sie ermöglichen ein schnelles Umsetzen von Baustelle zu Baustelle mit bis zu 40 km/h, ohne Beschädigung der Fahrbahnen mit festen Untergründen. Sie zeichnen sich durch eine hohe Laufruhe während des Betriebes aus, ohne Schaukelbewegung, da die gelenkte Achse meist eine hydraulisch sperrbare Pendelachse ist. Mobilbagger stehen während des Betriebes sicher und gleichmäßig auf vier Punkten.

Sobald sich ein derartiger Mobilbagger jedoch auf weichen oder sumpfigen Untergründen bewegen soll, treten erhebliche Nachteile auf. Der Druck auf die vier Zwillingsreifen ist häufig zu groß, so dass der Mobilbagger versinkt, tiefe Furchen zieht oder komplett stecken bleibt. Auf derartigen Untergründen können hingegen die herkömmlichen Kettenbagger fahren, die jedoch bei Kurvenfahrt ebenfalls tiefe Spuren hinterlassen, da ihre Lenkung darauf beruht, dass die Ketten unterschiedlich schnell oder gar in entgegengesetzten Richtungen laufen, was ebenfalls zu tiefen Furchen und damit zu enormen Flurschäden führt.

Der vorliegenden Erfindung liegt die Aufgabe zugrunde, eine Lösung für die obigen Probleme anzugeben, die diese Nachteile vermeidet.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht ein Kettenlaufwerk für einen Mobilbagger der eingangs genannten Art vor, bei dem das Kettenlaufwerk auf den Zwillingsreifen eines Mobilbaggers nachrüstbar und wechselbar ist und Bodenplatten aufweist, auf denen die Zwillingsreifen ablaufen, wobei das Kettenlaufwerk auch dann, wenn der Mobilbagger um eine Kurve fährt, gegen seitliche Verschiebung an den Zwillingsreifen gehalten ist. Hierdurch kann der Mobilbagger ohne tiefe Furchen, ohne Flurschäden durch eine Wiese und auf sumpfigen oder moosigen Untergründen fahren, da er stets auf den Bodenplatten abläuft.

Dies wird dadurch erreicht, dass jedes Kettenlaufwerk eine Gliederkette aufweist, die derart starr mit den Bodenplatten verbunden ist, dass sie sowohl bei der Geradeausfahrt als auch bei der Kurvenfahrt des Mobilbaggers in dem Spalt der Zwillingsreifen gehalten ist, so dass die Zwillingsreifen nicht in Kontakt mit dem überfahrenen Untergrund geraten können.

Die Breite der Gliederkette ist etwas kleiner als die Breite des Spalts der Zwillingsreifen, und ihre Glieder sind derart gelenkig miteinander verbunden, dass die Gliederkette in dem Spalt der Zwillingsreifen allen Lenk- und Abrollbewegungen der Zwillingsräder folgen kann. Dies ist auch dann der Fall, wenn der Mobilbagger auf dem Untergrund aufwärts oder abwärts fährt.

Die Gliederkette ist über Stützelemente mit den Bodenplatten verbunden, wobei die Stützelemente starr, d.h. nicht-gelenkig mit den Gliedern der Gliederkette und den Bodenplatten verbunden sind, wodurch die Kette hoch über dem Untergrund läuft und tief in den Spalt zwischen den Reifen eingreift. Die Gliederkette verläuft bevorzugt etwa 10 bis 15 cm über den Bodenplatten, die aus Metall, vorzugsweise aber aus Kunststoff bestehen sollten.

In weiteren Einzelheiten wird vorgeschlagen, dass jeweils wenigstens zwei aufeinander folgende Kettenglieder über je ein Stützelement mit einer Bodenplatte verbunden sind, wobei aber auch mehr Kettenglieder die Bodenplatte stützen und halten können.

Die Stützelemente können stab- oder bolzenförmig sein und eine Länge von 10 bis 15 cm haben, womit die Kette so tief in dem Spalt der Zwillingsreifen gehalten sind, dass die Bodenelementen bei Kurvenfahrten nicht seitlich von den Reifen abrutschen können.

Weiter wird mit Vorteil vorgeschlagen, dass die Bodenplatten im Grundriss eine solche Form haben, dass ihre Ränder auch bei größtmöglicher Einlenkung der Räder sich nicht überlappen und nicht aneinander anstoßen, sondern dicht voneinander beabstandet sind Mit Vorteil wird vorgeschlagen, dass die Bodenplatten annähernd die Form einer stumpfen Raute haben, wobei sie von der Mitte weg zu beiden Seiten V-förmig schmaler werden. Der Begriff der "stumpfen" Raute bedeute, dass die Spitzen einer exakten Raute dabei abgeschnitten sind.

Die Bodenplatten nähern sich beim Kurvenfahren unter dem eingelenkten Zwillingsreifen aneinander an. Außerdem sind die Bodenplatten in Längsrichtung der Gliederkette dicht zueinander angeordnet, so dass die Reifen eine permanente Auflage auf den Bodenplatten haben und nicht zwischen jeder Bodenplatte eine merkbare Spalte überfahren müssen, so dass ein Mobilbagger mit den erfindungsgemäßen Kettenlaufwerken sich durch eine besonders hohe Laufruhe auszeichnet.

Außerdem wird vorgeschlagen, dass die Bodenplatten an ihrer den Reifen zugewandten Innenflächen eine Oberfläche mit großer Rauigkeit aufweisen können, die durch kleine Vorsprünge und Vertiefungen hervorgerufen werden kann. Durch eine nicht-glatte Unterlage der Reifen auf den Bodenplatten lassen sich die gewünschten Reibungskräfte beim Ablaufen der Reifen auf den Kettenlaufwerken hervorrufen.

Die Ketten sind vorteilhafterweise mit geringer Spannung zu montieren, da sich beim Einlenken deren Länge verändert, sobald der Anlenkpunkt der Zwillingsnabe weit vom Zwillingsreifen-Mittelpunkt entfernt ist. Auf diese Weise haben die Kettenlaufwerke genügend Längenreserven, wenn der Mobilbagger über Wurzelstöcke oder anderweitige Hindernisse fahren muss, ohne dass es zu einer Spannung zwischen Vorder- und Hinterachse kommt. Eine derartige Spannung ist zu vermeiden, da hierfür weder die Ketten noch das Fahrwerk ausgelegt ist.

Nachfolgend wird eine Ausführungsform des erfindungsgemäßen Kettenlaufwerks für einen Mobilbagger mit vier Zwillingsrädern anhand der rein schematischen Zeichnung erläutert. Dabei zeigen:
- Figur 1: eine schematische Aufsicht auf einen Mobilbagger ohne Kettenlaufwerke;
- Figur 2: den Mobilbagger mit nachgerüsteten Kettenlaufwerken in einer Kurvenfahrt mit einer Aufsicht auf die Kettenlaufwerke;
- Figur 3: eine Unteransicht eines Abschnitts eines Kettenlaufwerks;
- Figur 4: eine schematische Seitenansicht eines Teils eines Kettenlaufwerks.

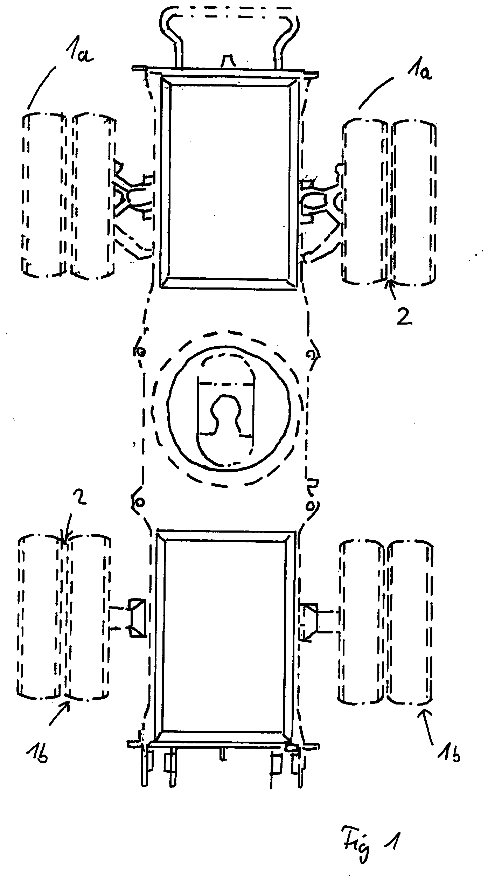

Figur 1 zeigt auf rein schematische Weise eine Aufsicht auf einen Mobilbagger mit zwei lenkbaren vorderen Zwillingsrädern mit Zwillingsreifen 1a und zwei hinteren nicht-lenkbaren Zwillingsrädern mit Zwillingsreifen 1b. Zwischen den Reifen jedes Zwillingsreifens 1a, 1b befindet sich ein Spalt 2, der so breit ist, dass eine Gliederkette 4 eines auf den Zwillingsreifen montierten Kettenlaufwerks 3 in den Spalt 2 eintreten kann.

Die Gliederkette 4 ist über starre Stützelemente 5 mit Bodenplatten starr, d.h. nicht-gelenkig verbunden. Dabei sind jeweils zwei aufeinander folgende Kettenglieder 4a über jeweils ein Stützelement 5 mit einer Bodenplatte 6 verbunden.

Die Stützelemente haben bevorzugt eine Stab- oder Bolzenform mit einer Länge von ca. 10 bis 15 cm.

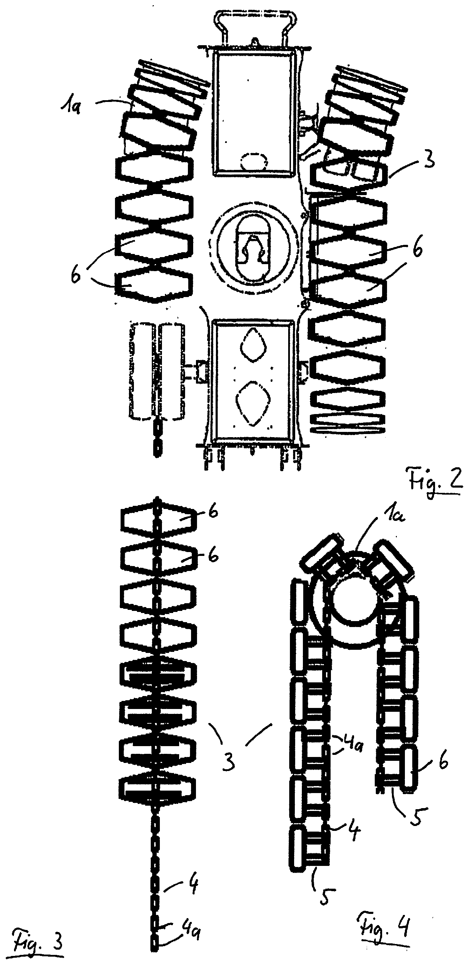

Wie Figur 2 zeigt, haben die Bodenplatten eine solche Form, dass ihre Ränder sich auch bei maximaler Lenkstellung der lenkbaren Räder nicht überlappen, sondern nur aneinander annähern und dicht voneinander beabstandet bleiben. Hierdurch ist gewährleistet, dass die Zwillingsreifen die Bodenplatten glatt, ohne eine merkbare Spalte überfahren.

Die Bodenplatten 6 haben hierzu im wesentlichen eine stumpfe Rautenform.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Kettenlaufwerke für Mobilbagger mit zwei lenkbaren vorderen Zwillingsrädern mit Zwillingsreifen (1a) und zwei hinteren nicht lenkbaren Zwillingsrädern mit Zwillingsreifen (1b), zwischen deren Zwillingsreifen jeweils ein Spalt verbleibt,
wobei jeweils ein Kettenlaufwerk (3) auf den Zwillingsreifen (1a, 1b) beider Seiten des Mobilbaggers montierbar ist und Bodenplatten (6) aufweist,
**dadurch gekennzeichnet,**
**dass** jedes Kettenlaufwerk (3) eine Gliederkette (4) aufweist, die über Stützelemente (5) starr mit den Bodenplatten (6) verbunden ist und in dem Spalt (2) der Zwillingsreifen (1a, 1b) gehalten ist,
**dass** die Breite der Gliederkette (4) kleiner als die Breite des Spalts (2) der Zwillingsreifen (1a, 1b) ist,
**dass** die Glieder der Gliederkette (4) derart gelenkig miteinander verbunden sind, dass die Gliederkette (4) allen Lenkbewegungen der Zwillingsräder (1a) folgen kann, und die Bodenplatten (6) auch bei eingelenkten Rädern gegen seitliche Verschiebung an den Zwillingsreifen (1a, 1b) gehalten sind, und
**dass** die Bodenplatten (6) eine solche Form haben, dass ihre Ränder auch bei maximaler Lenkstellung der lenkbaren Räder dicht voneinander beabstandet bleiben.

2. Kettenlaufwerke nach Anspruch 1,
**dadurch gekennzeichnet,**
**dass** die Stützelemente (5) starr, nicht-gelenkig mit den Gliedern (4a) der Gliederkette (4) und den Bodenplatten (6) verbunden sind.

3. Kettenlaufwerke nach einem der Ansprüche 1 oder 2,
**dadurch gekennzeichnet,**
**dass** jeweils wenigstens zwei aufeinander folgende Kettenglieder (4a) über ein Stützelement (5) mit einer Bodenplatte (6) verbunden sind.

4. Kettenlaufwerke nach einem der Ansprüche 1 bis 3,
**dadurch gekennzeichnet,**
**dass** die Stützelemente (5) stab- oder bolzenförmig sind und eine Länge von 10 bis 15 cm haben.

5. Kettenlaufwerke nach einem der Ansprüche 1 bis 4,
**dadurch gekennzeichnet,**
**dass** die Bodenplatten (6) eine stumpfe Rautenform haben.

6. Kettenlaufwerke nach einem der Ansprüche 1 bis 5,
**dadurch gekennzeichnet,**
**dass** die Bodenplatten (6) an ihrer den Reifen zugewandten Innenflächen eine Oberfläche mit großer Rauigkeit aufweist.
